Europäisches Patentamt

European Patent Office

Office européen des brevets

(11) Numéro de publication: **0 421 859 A1**

## (12) DEMANDE DE BREVET EUROPEEN

(21) Numéro de dépôt: 90402709.1

(22) Date de dépôt: 01.10.90

(51) Int. Cl.5: **G06F 15/70**

(30) Priorité: 03.10.89 FR 8912894

(43) Date de publication de la demande:
**10.04.91 Bulletin 91/15**

(84) Etats contractants désignés:
**CH DE GB IT LI NL**

(71) Demandeur: THOMSON-CSF
51, Esplanade du Général de Gaulle
F-92800 Puteaux(FR)

(72) Inventeur: **Burel, Gilles**
**THOMSON-CSF, SCPI, Cédex 67**
**F-92045 Paris la Défense(FR)**
Inventeur: **Catros, Jean-Yves**
**THOMSON-CSF, SCPI, Cédex 67**
**F-92045 Paris la Défense(FR)**

(74) Mandataire: Turlèque, Clotilde et al
THOMSON-CSF SCPI
**F-92045 PARIS LA DEFENSE CEDEX 67(FR)**

(54) **Procédé et dispositif de segmentation automatique d'images par analyse de texture.**

(57) Le dispositif de segmentation automatique d'images selon l'invention comporte un processeur de données associé à un réseau d'automates organisé en trois niveaux ; les entrées de chacun des automates sont pondérées par des coefficients ajustables ; le nombre d'automates du premier niveau est égal au nombre de valeurs caractéristiques calculées à partir de fenêtres d'observation prises d'abord dans un ensemble d'exemples de zones d'images ayant des textures différentes : leur apprentissage par le réseau permet d'ajuster les coefficients de pondération des automates du réseau jusqu'à ce que tous les exemples d'une même texture conduisent à une même configuration, caractéristique de cette texture, en sortie du réseau.

La segmentation d'une image consiste alors, à partir d'ensembles de valeurs caractéristiques calculées sur des zones d'images à analyser, à analyser la sortie du réseau pour en déduire la texture de la zone.

Application à la segmentation d'images aériennes ou d'images médicales, par exemple, et plus généralement à tout type d'images dans lesquelles les régions sont discriminables par leur texture.

FIG_2

## PROCÉDÉ ET DISPOSITIF DE SEGMENTATION AUTOMATIQUE D'IMAGES PAR ANALYSE DE TEXTURE

L'invention se rapporte au domaine de l'analyse automatique d'images par ordinateur et notamment à un procédé, et au dispositif correspondant de segmentation automatique d'images par analyse de leur texture.

La texture est une caractéristique importante pour l'analyse, la segmentation et la classification des images, notamment lorsque celles-ci sont de faible contraste. La perception des textures est très liée au système visuel : cette propriété de surface perçue par l'observateur est considérée comme étant homogène et donc invariante par translation pour une zone de même type. L'observation d'une texture laisse la même impression visuelle quelle que soit la partie de la texture observée.

Le problème à résoudre lors de l'analyse des textures sur une image est de repérer les modifications de texture à partir d'une fenêtre d'observation déplacée sur l'image.

De nombreuses méthodes ont été proposées pour l'analyse des textures. Ces méthodes peuvent être regroupées en quatre familles distinctes selon les paramètres analysés :

- les méthodes procédant par analyse de caractéristiques spatiales déterminent la période de répétition d'un motif élémentaire ;
- les méthodes procédant par analyse des caractéristiques fréquentielles utilisent des calculs par transformation de Fourier pour rechercher des fréquences caractéristiques ;
- les méthodes fonctionnant par analyse suivant des matrices de co-occurence utilisant un formalisme plus complexe en effectuant autour de chaque point et pour toutes les directions possibles des analyses statistiques sur les répétitions de niveaux de gris ;
- les méthodes fonctionnant par analyse structuraliste, mettant en oeuvre l'intelligence artificielle.

Ces méthodes sont décrites en détail dans les documents suivants :

- A. GAGALOWICZ "Vers un modèle de textures" Thèse de doctorat d'état es sciences mathématiques Université de Paris IV-1983
- S. RABOISSON "Traitements numériques d'images par caractérisation de textures. Application à la segmentation d'images échographiques" Thèse de doctorat de 3ème cycle en traitement de l'information - Université de Rennes I-1985.

Les méthodes existantes nécessitent donc une modélisation de la notion de texture par des modèles statistiques ou structuralistes et ces méthodes échouent lorsque les textures présentes sur l'image à analyser ne sont pas descriptibles par le modèle et donc ne peuvent pas être repérées.

L'invention a pour objet un procédé d'analyse de texture utilisant une approche différente, selon laquelle un apprentissage par un réseau d'automates est effectué dans une phase préalable à partir d'échantillons de texture analysés par le système, le système étant à l'issue de cette phase d'apprentissage en état de détecter toute texture proche de l'une des textures présentées dans la phase préalable. Ainsi, lorsque l'apprentissage est terminé le système est capable de classifier les régions d'une image à partir d'une fenêtre d'observation se déplaçant sur cette image.

Selon l'invention, un procédé de segmentation automatique d'images par analyse de texture, est caractérisé en ce que :

- dans une phase préalable, un fichier de plusieurs exemples de chacune de plusieurs textures est créé à partir d'ensembles de valeurs caractéristiques, chaque ensemble étant représentatif d'un échantillon d'une texture donnée,
- puis, dans une phase d'apprentissage, ces ensembles de valeurs sont utilisés pour ajuster par approches successives des coefficients de pondération d'un réseau d'automates jusqu'à ce que les sorties de ce réseau soient aussi proches que possible d'une configuration caractéristique d'une texture donnée, pour tous les exemples de cette texture, chacune des textures étant associée à une configuration caractéristique,
- puis, dans une phase de classification, les images sont traitées par calcul d'ensembles de valeurs caractéristiques de zones délimitées par une fenêtre d'observation déplacée dans l'image, chaque ensemble de valeurs caractéristiques d'une zone appliqué à l'entrée du réseau d'automates conduisant à une configuration de sortie de ce réseau à partir de laquelle sont déterminés une texture parmi celles apprises dans la phase d'apprentissage, et une valeur de confiance associée fonction d'un écart entre la configuration de sortie obtenue et celle associée à cette texture déterminée.

L'invention sera mieux comprise et d'autres caractéristiques apparaîtront à l'aide de la description en référence aux figures annexées.

- La figure 1 est le schéma synoptique d'un automate élémentaire du dispositif selon l'invention ;
- La figure 2 est le schéma synoptique de l'ensemble de l'automate utilisé dans le dispositif de segmentation d'images par analyse de texture selon l'invention ;

EP 0 421 859 A1

- La figure 3 schématise la fenêtre d'observation et l'association de pixels pour le calcul d'une valeur particulière de la corrélation ;
- La figure 4 est l'organigramme de la phase de création du fichier des exemples ;
- La figure 5 est l'organigramme de la phase d'apprentissage ;

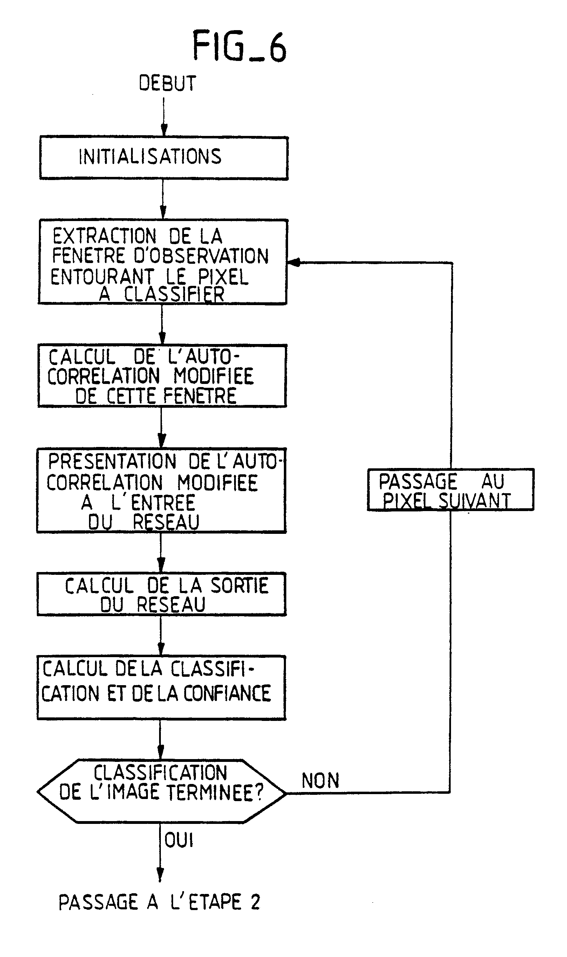

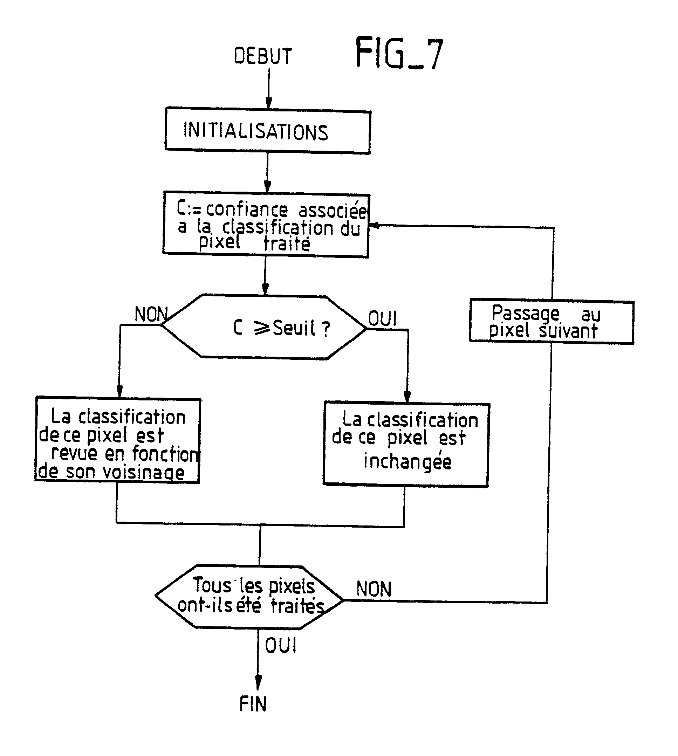

- Les figures 6 et 7 sont les organigrammes respectivement de la première et de la deuxième étape de la phase de classification ;
- Les figures 8a, 8b, 8c et 8d illustrent les résultats obtenus sur un exemple.

Comme indiqué ci-dessus, les méthodes connues pour la segmentation d'image par analyse de textures nécessitent des modèles, et sont donc restreintes à un type ou à des types de textures particuliers. Pour remédier à cet inconvénient, le dispositif de segmentation d'images par analyse de texture selon l'invention utilise pour la classification des textures, un réseau d'automates dont le nombre de degrés de liberté est suffisant pour pouvoir, en fixant ces différents degrés, obtenir en sortie de l'automate le résultat attendu pour un ensemble de textures dites "apprises", cet automate pouvant ensuite être utilisé pour des images inconnues et donner le type de texture reconnu dans les différentes zones, par analogie avec les textures apprises. Ainsi, les performances du dispositif peuvent être augmentées simplement en élargissant la base d'apprentissage, et le dispositif n'est pas limité à un type de textures ou des types de textures particuliers susceptibles d'être caractérisés par des modèles, comme dans les dispositifs antérieurs.

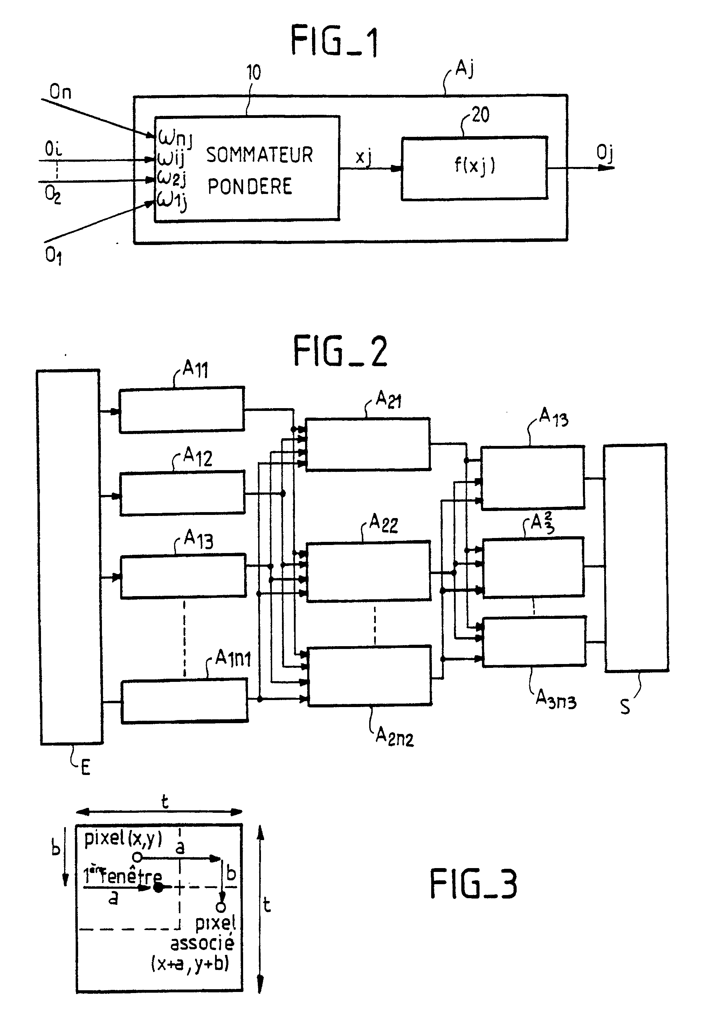

Pour cela, le dispositif de segmentation selon l'invention comporte un processeur de données (non représenté) associé à un réseau d'automates selon l'invention comporte un ensemble d'automates élémentaires du type de celui représenté sur la figure 1. Cet automate comporte principalement un sommateur pondéré, 10 associé à un dispositif de calcul de fonction, 20. Les valeurs aux entrées $O_1$, $O_2$, ... $O_i$, $O_n$ du sommateur pondéré 10 sont multipliées par des coefficients, respectivement $w_{1j}$, $w_{2j}$ ... $w_{ij}$ ... $w_{nj}$ puis additionnées pour former une valeur intermédiaire $x_j$ à laquelle est appliqué un calcul de fonction correspondant, $f(x_j)$ qui fournit la valeur de la sortie $O_j$ de cet automate élémentaire $A_j$. Préférentiellement la fonction utilisée est la fonction tangente hyperbolique qui permet de tendre, pour la sortie $O_j$, vers l'une ou l'autre des valeurs +1 ou -1 lorsque les valeurs intermédiaires $x_j$ augmentent en valeur absolue.

Le réseau d'automates utilisant de tels automates élémentaires est organisé, en plusieurs niveaux, de telle façon que, en tenant compte de valeurs caractéristiques calculées sur des exemples, les coefficients de pondération évoluent en cours d'apprentissage jusqu'à ce que les automates de dernier niveau du réseau fournissent pour tous les exemples d'une texture donnée un coefficient proche de 1 sur la sortie de l'automate correspondant à cette texture, et des coefficients proche de -1 sur l'ensemble des sorties des autres automates.

Les valeurs caractéristiques calculées sur les différents exemples de chacune des textures, puis sur les images à analyser, sont les valeurs d'une fonction d'autocorrélation, calculées pour divers déplacements dans une fenêtre d'observation.

Le réseau d'automates représenté sur la figure 2 est constitué de la manière suivante :
- Au premier niveau, le nombre d'entrées et le nombre d'automates sont égaux au nombre de valeurs caractéristiques calculées pour chaque fenêtre d'observation des automates à une seule entrée étant prévus à ce niveau, le sommateur pondéré étant réduit à un simple multiplieur par 1. A titre d'exemple, pour une fenêtre d'observation t.t pixels dans laquelle le déplacement horizontal relatif à la corrélation varie de 0 à (h-1), et le déplacement vertical de -(h-1) à 0, puis de 0 à (h-1), $2h^2$ valeurs de la fonction d'autocorrélation sont calculées pour chaque fenêtre d'observation. Le nombre d'entrées du réseau d'automates est donc égal à $n_1$ = $2h^2$, et le nombre d'automates $A_{11}$, $A_{12}$ ... $A_{1n1}$ correspondant au premier niveau est aussi égal à $n_1$.
- Au deuxième niveau, un nombre $n_2$ d'automates $A_{21}$, $A_{22}$ ... $A_{2n2}$ compris entre la valeur $n_3$ du nombre d'automates du dernier niveau et le nombre d'exemples sont prévus, chacun des automates du deuxième niveau ayant $n_1$ entrées reliées aux $n_1$ sorties des automates du premier niveau. A titre d'exemple, le nombre $n_2$ d'automates du deuxième niveau peut être égal à la moitié du nombre d'exemples.
- Au troisième niveau, $n_3$ automates $A_{31}$, $A_{32}$ ... $A_{3n3}$ sont prévus, en nombre égal aux différentes textures caractérisées par les exemples utilisés dans la phase d'apprentissage, et qui pourront donc être reconnues dans les images dans une phase ultérieure de classification. Comme au niveau précédent les automates du dernier niveau sont reliés à chacune des sorties du deuxième niveau.

Le dispositif fonctionne de la manière suivante :
Un prétraitement est réalisé sur une fenêtre d'observation, que ce soit une fenêtre dans un exemple utilisé pour l'apprentissage ou une fenêtre d'observation prise dans une image à traiter. Une telle fenêtre d'observation de dimensions t.t pixels est illustrée sur la figure 3, à l'intérieur de laquelle les coordonnées

3

d'un pixel courant ont été notées x et y. Dans cette fenêtre d'observation, une fenêtre de corrélation de dimension h.h est déplacée pour calculer les valeurs de la fonction d'autocorrélation C(a,b) à partir des valeurs de luminance f(x,y) du pixel de coordonnées (x,y). Cette fonction d'autocorrélation normalisée est calculée par la formule suivante :

$$(1) \qquad C(a,b) = \frac{\displaystyle\sum_{x=0}^{t-a-1} \sum_{y=0}^{t-b-1} \bar{f}_1(x,y)\, \bar{f}_2(x+a,\ y+b)}{\left\{\displaystyle\sum_{x=0}^{t-a-1} \sum_{y=0}^{t-b-1} \bar{f}_1^2(x,y)\right\}\left\{\displaystyle\sum_{x=0}^{t-a-1} \sum_{y=0}^{t-b-1} \bar{f}_2^2(x+a,\ y+b)\right\}}$$

$$\text{où : } \bar{f}_1(x,y) = f(x,y) - \frac{\displaystyle\sum_{i=0}^{t-a-1} \sum_{j=0}^{t-b-1} f(i,j)}{(t-a)\ (t-b)}$$

$$\bar{f}_2(x+a,\ y+b) = f(x+a,y+b) - \frac{\displaystyle\sum_{i=0}^{t-a-1} \sum_{j=0}^{t-b-1} f(i+a,j+b)}{(t-a)\ (t-b)}$$

A titre d'exemple la fenêtre d'observation peut avoir une dimension de 25.25 pixels, et l'extension de la corrélation une dimension de 16.16 pixels, ce qui donne 16 déplacements possibles pour a compris entre 0 et 15 et b compris entre 0 et 15, a et b étant les déplacements respectivement horizontal et vertical dans la fenêtre.

D'une façon plus générale, la fonction est calculée dans un premier temps pour $0 \le a \le h$ et $0 \le b \le h$ puis pour $0 \le a \le h$ et $-h \le b \le 0$. Ainsi, les calculs dans une fenêtre d'observation donne au total $2h^2$ valeurs qui sont les $2h^2$ valeurs qui sont présentées à l'entrée du réseau d'automates. h est un paramètre déterminé par l'utilisateur compris entre 2 et t-2 qui peut être avantageusement choisi égal à la partie entière de 2t/3.

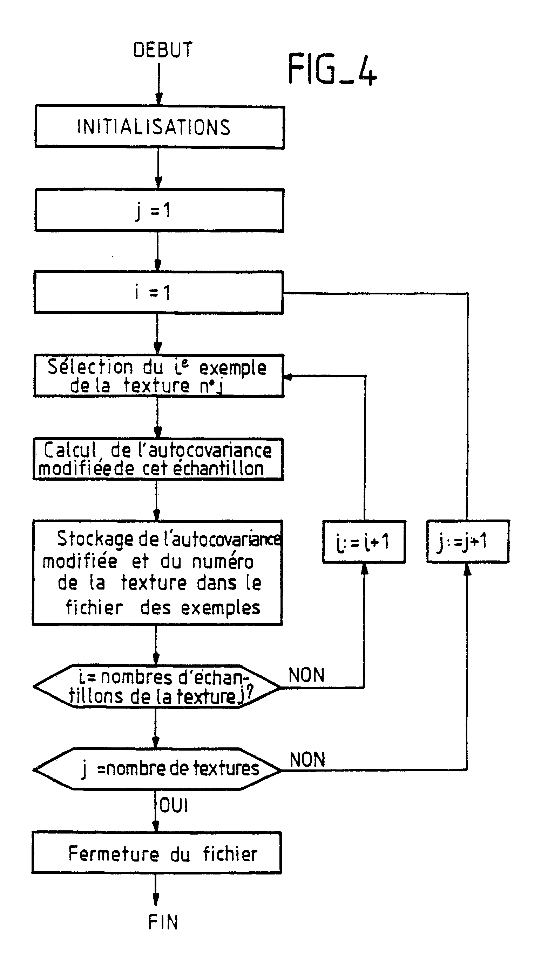

Dans la phase de création d'un fichier des exemples, ces calculs sont effectués pour plusieurs exemples de chacune des différentes textures. Par exemple pour le traitement d'images aériennes 15 exemples de textures caractéristiques de forêts peuvent être utilisés et pour chacun de ces exemples les $2h^2$ valeurs de la fonction d'autocorrélation modifiée sont calculées et stockées. La même chose est effectuée pour un autre type de texture, par exemple une texture caractéristique de routes, et cela au moyen de plusieurs échantillons. Cette opération est répétée pour un ensemble des autres textures d'exemples qui seront "appris" par le réseau d'automates. L'organigramme représenté sur la figure 4 illustre cette phase de création du fichier des exemples.

Une étape d'initialisation fixe le nombre d'exemples de chacune des textures destinés à former la base des exemples. Pour le premier exemple (i = 1) de la texture numéro 1 (j = 1), le calcul des $2h^2$ valeurs de la fonction d'autocorrélation normalisée est effectué, puis ces valeurs sont stockées, avec le numéro de la texture correspondante. Cette opération est effectuée pour tous les exemples de la texture numéro 2..., et enfin pour tous les exemples de toutes les textures à "apprendre", tous les exemples ayant été traités et les valeurs correspondantes stockées, la base d'exemples est complète et le fichier correspondant est fermé.

Comme indiqué ci-dessus à partir de cet ensemble de valeurs calculées pour chacun des exemples de chacune des textures, une phase d'apprentissage de ces exemples par le réseau d'automates visant à ajuster les coefficients de pondération est effectuée. Pour cela, les différents coefficients de pondération sont ajustés, à partir de valeurs de départ arbitraires, par approches successives, en utilisant tous les exemples, généralement plusieurs fois, et dans un ordre quelconque aléatoire et de façon qu'à l'issue de la phase d'apprentissage un exemple caractéristique d'une texture donnée conduise à l'obtention d'un coefficient aussi proche de 1 que possible sur la sortie caractéristique de cette texture, et aussi proche de -1 que possible sur les autres sorties, et ce pour chacune des textures.

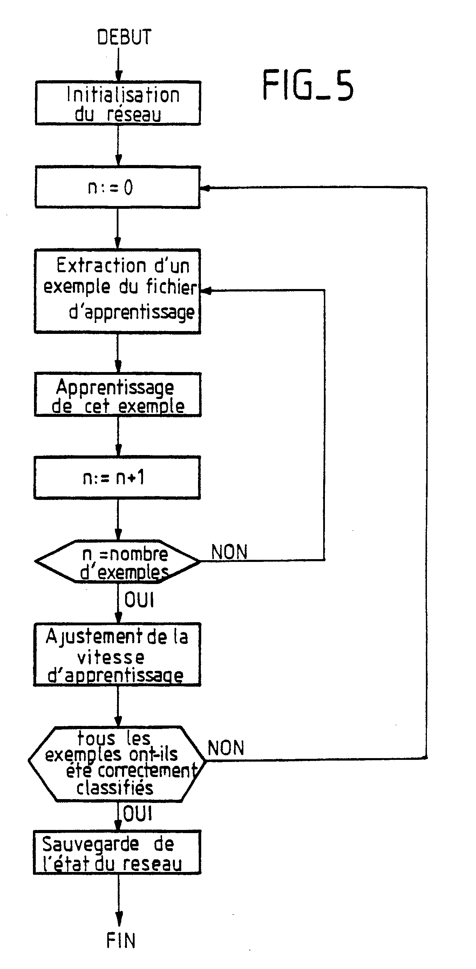

Cet apprentissage est effectué de la manière suivante décrite ci-après en référence à la figure 5. Une phase d'initialisation des coefficients de pondération est tout d'abord effectuée, ces coefficients étant initialisés aléatoirement en utilisant une loi de probabilité uniforme dans l'intervalle -M, +M ; la valeur de M est choisie pour les automates de la deuxième couche égale à $2/\sqrt{n_1}$ et pour les automates de la couche 3 étant choisis à $2/\sqrt{n_2}$.

L'apprentissage consiste alors en la modification des valeurs des coefficients de pondération $W_{ij}$, jusqu'à obtention du résultat souhaité, ces coefficients étant modifiés après chaque présentation d'un exemple. Cette modification se déroule de la manière suivante : à un rang d'itération k donné, un exemple est tiré de la base des exemples et les valeurs de la fonction d'autocorrélation modifiée calculées pour cet exemple d'une texture donnée sont appliquées aux entrées du réseau ; les sorties correspondantes du réseau sont alors calculées. Cet exemple étant caractéristique d'une texture donnée devra donner à la fin de l'apprentissage, en sortie de l'automate associé à cette texture un coefficient +1 ou voisin de +1, les sorties des autres automates du dernier niveau donnant des valeurs négati ves aussi proches de -1 que possible. Les valeurs de sortie du réseau sont donc comparées aux valeurs de sortie désirées :

Soit $E_j$ l'erreur sur la sortie par rapport à la sortie désirée mesurée par la valeur $\frac{1}{2}(O_j-S_j)^2$ lorsque $|O_j-S_j|$ est inférieur ou égal à 1 et par $(x_j-1)/2$ si $|O_j-S_j|$ est supérieur à 1.

L'erreur de sortie totale E est alors la somme des erreurs $E_j$ ainsi calculées pour l'ensemble des sorties de $j = 1$ à $n_3$.

Les valeurs des coefficients de pondération sont alors modifiées en tenant compte des modifications de ces coefficients de pondération effectuées au rang d'itération précédent, k-1 et de la dérivée de la fonction d'erreur, pondérée par une valeur caractéristique d'un paramètre dit "vitesse d'apprentissage" $\eta$ et d'un paramètre de filtrage passe bas $\beta$ (généralement choisi égal à 0,98, et en tous cas toujours compris entre 0 (inclus) et 1 (exclus) de la manière suivante :

$$\Delta W_{ij}(k) = -\eta \frac{\partial E}{\partial W_{ij}}(k) + \beta \Delta W_{ij}(k-1)$$

Cette modification des coefficients de pondération permet de faire varier les poids en fonction inverse du gradient d'erreur, tout en tenant compte des variations effectuées à l'itération précédente, c'est-à-dire en effectuant un filtrage passe-bas qui permet d'éviter les oscillations pour conserver la valeur moyenne du coefficient de pondération.

Ces coefficients étant modifiés, un nouvel exemple de texture, est tiré dans la base formant le fichier des exemples.

La même opération est effectuée plusieurs fois, à partir de tous les exemples tirés de la base des exemples, jusqu'à ce que les sorties du réseau d'automates soient toujours dans l'état correspondant au type de texture utilisé, c'est-à-dire que pour tous les exemples, les sorties soient proches de -1 pour toutes celles qui ne correspondent pas à l'exemple et proche de +1 pour celle qui correspond à l'exemple, quel que soit l'exemple tiré dans la base. Les seuils peuvent être fixés de la manière suivante : on peut admettre que les coefficients de pondération ont les valeurs convenables lorsque le coefficient de sortie de l'automate correspondant à l'exemple est supérieur ou égal à 0,9 et tous les autres coefficients égaux ou inférieurs à -0,9.

On admet alors que la phase d'apprentissage du réseau d'automates est terminée, et qu'un ensemble de valeurs d'autocorrélation caractéristique d'une fenêtre dans une image permettra de déterminer le type de texture dans cette fenêtre le plus proche de celles apprises par le réseau. Le réseau d'automates est alors en condition de fonctionnement.

Pour l'analyse d'une image complète, la fenêtre d'observation est déplacée dans l'image, par exemple de 3 en 3 pixels, pour parcourir toute l'image. Les valeurs de la fonction d'autocorrélation sont calculées dans cette fenêtre pour chaque position et appliquées à l'entrée du réseau. Ces valeurs appliquées à l'entrée du réseau conduisent, par l'application des coefficients de pondération déterminés dans la phase d'apprentissage, à l'obtention d'une valeur sur chacune des sorties du réseau. On admet alors que la texture est du type correspondant à l'automate dont la sortie est de niveau le plus élevé, mais on associe à cette détermination de texture ou "classification" un degré de confiance calculé de la manière suivante : si $j_1$ est le numéro de l'automate de sortie dont la sortie est la plus forte, la confiance est mesurée par la valeur minimum de l'écart entre la sortie de niveau le plus fort et toutes les autres sorties. A titre d'exemple pour un automate dans lequel quatre textures différentes ont été apprises par un ensemble d'exemples correspondants, si la sortie de l'automate $A_{13}$ du dernier niveau est égale à -1 celle de l'automate $A_{23}$

égale à +0.95, celle de l'automate $A_{33}$ égale à -0.35 et celle de l'automate $A_{43}$ égale à -0.98, la fenêtre d'observation testée a la texture caractérisée par la sortie n° 2 et la confiance correspondante est égale à :
$\frac{1}{2}$ (min((0.95 + 1),(0.95 + 0.35),(0.95 + 0.98)) = 0.65.

Le coefficient de confiance ayant été normalisé en divisant par 2 la confiance est une valeur comprise entre 0 et 1 la valeur 1 correspondant à la confiance maximale.

Pour chacune des positions de la fenêtre d'observation un numéro de classification, correspondant à une texture apprise dans la phase d'apprentissage par le dispositif, est affecté au pixel central de cette fenêtre lorsque la fenêtre est déplacée de pixel en pixel, ou à la zone n.n pixels entourant ce pixel central lorsque la fenêtre est déplacées de n pixels en n pixels, avec un indice de confiance correspondant. Ce numéro de texture est affecté au pixel central de la fenêtre d'observation dans une position donnée.

A l'issue de cette phase, il est possible que des pixels isolés ou des zones élémentaires n.n pixels isolées aient été affectés de numéros de textures différents de l'ensemble de ceux de l'ensemble des pixels ou des zones du voisinage. En conséquence un traitement est effectué pour les pixels ou zones de l'image pour lesquels la confiance en la classification attribuée est inférieure à un seuil fixé par l'utilisateur, pour lui affecter la classification majoritaire dans un voisinage v, l'étendue du voisinage v étant également définie par l'utilisateur. Tous les pixels du voisinage votent pour leur classe avec un poids égal à leur confiance.

A l'issue de cette ré-affectation des points, la carte de classification est considérée comme correcte.

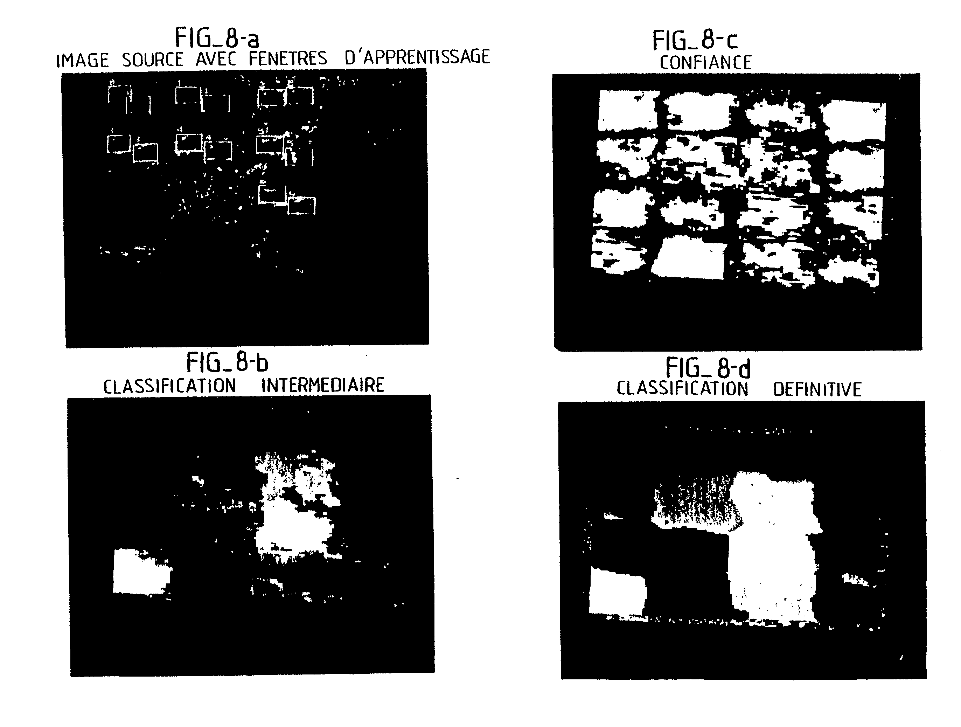

Les figures 8a, 8b, 8c et 8d illustrent les résultats obtenus, sur un exemple.

La figure 8a est une image comportant plusieurs zones de 7 textures différentes. Deux exemples de chacune des textures ont été traités et utilisés pour la création du fichier d'exemples.

Les coefficients d'un réseau d'automates ont été déterminés à partir de ces exemples pour que les 7 textures soient caractérisées par une configuration particulière des sorties du réseau.

Puis le traitement de l'ensemble de l'image a permis d'obtenir une classification de l'image en zones selon leurs textures, représentée par la carte de classification intermédiaire de la figure 8b et où chaque niveau de gris représente une texture donnée, à laquelle des valeurs de confiance correspondantes sont associées comme représentés sur la figure 8c où la confiance maximum "1" est caractérisée par une zone blanche.

La confiance est moins bonne bien entendu, dans les zones de transition entre textures.

La figure 8d illustre la classification finale tenant compte de la confiance et de la classification dans le voisinage d'un pixel (ou d'une zone élémentaire).

Comme indiqué ci-dessus les avantages de cette méthode de classification et du dispositif correspondant sont leur simplicité et le fait qu'il n'y a pas de restriction à un type de textures particulier car il n'y a pas de modélisation.

Ce procédé et le dispositif correspondant de segmentation d'images par classification des textures peut être appliqué pour la segmentation de toute image dans laquelle les régions sont discriminables par leurs textures, notamment aux images aériennes ou aux images de cellules biologiques prises au microscope.

L'invention n'est pas limitée au mode de réalisation décrit et représenté : en particulier les valeurs indiquées ci-dessus peuvent être modifiées.

Notamment il a été indiqué que dans la phase d'apprentissage un coefficient caractérisant "la vitesse d'apprentissage" $\eta$ est utilisé pour le calcul des variations des coefficients de pondération. Un perfectionnement utile peut être l'ajustement dynamique de cette vitesse d'apprentissage. En effet si sa valeur est trop faible la phase d'apprentissage ne convergera que très lentement, mais par ailleurs, si elle est trop importante, il n'y aura pas de linéarisation du système autour du point de fonctionnement. En conséquence une caractéristique supplémentaire de l'invention consiste à initialiser la phase d'apprentissage avec une valeur de vitesse d'apprentissage assez faible, et de mettre en oeuvre, au fur et à mesure que se déroule l'apprentissage, une règle d'ajustement automatique qui permet d'augmenter cette vitesse lorsque la convergence est satisfaisante. En conséquence, en phase d'apprentissage, la vitesse d'apprentissage est réajustée dynamiquement après chaque présentation de l'ensemble des exemples du fichier d'exemples.

De plus à chaque exemple est attribué une vitesse d'apprentissage propre, ce qui permet d'insister sur les exemples les plus "difficiles" à apprendre. Ainsi on repère l'exemple qui a créé la plus forte erreur E et pour cet exemple on multiplie la vitesse d'apprentissage par un coefficient m en examinant si l'erreur a augmenté. Exprimé de manière mathématique, cette règle d'ajustement dynamique de la vitesse d'apprentissage peut être décrite de la manière suivante :

Pour chaque présentation de l'ensemble des exemples

EP 0 421 859 A1

$$E_{max} = \max_{exemples}(\max_j |O_j - S_j|)$$

pour $j = 1$ à $n_3$
où $O_j$ est la valeur de sortie de l'automate $A_j$ et où $S_j$ est la valeur de sortie désirée.
. $ID_{ex}$ est l'identité de l'exemple ayant donné cette erreur maximale $E_{max}$ ;
. Equad est l'erreur quadratique

$$\sum_{exemples}(\sum_j (O_j - S_j)^2)$$

pour les automates $A_j$ de $j = 1$ à $n_3$ du dernier niveau.

La règle d'évolution est la suivante :
- pour l'initialisation, pour tous les exemples $\eta = \eta_o$, valeur initiale fournie par l'utilisateur.

Après chaque présentation de l'ensemble des exemples :

$\eta(ID_{ex})$ devient $m.\eta$ ($ID_{ex}$), ($m = 1.1$ par exemple)
- Si alors Equad > 1,01 Equad (présentation précédente), la vitesse d'apprentissage $\eta$ est réduite à $\eta/m$ pour tous les exemples.

**Revendications**

1. Procédé de segmentation automatique d'images par analyse de texture, caractérisé en ce que :
- dans une phase préalable, un fichier de plusieurs exemples de chacune de plusieurs textures est créé à partir d'ensembles de valeurs caractéristiques, chaque ensemble étant représentatif d'un échantillon d'une texture donnée,
- puis, dans une phase d'apprentissage, ces ensembles de valeurs sont utilisés pour ajuster par approches successives des coefficients de pondération d'un réseau d'automates jusqu'à ce que les sorties de ce réseau soient aussi proches que possible d'une configuration caractéristique d'une texture donnée, pour tous les exemples de cette texture, chacune des textures étant associée à une configuration caractéristique,
- puis, dans une phase de classification, les images sont traitées par calcul d'ensembles de valeurs caractéristiques de zones délimitées par une fenêtre d'observation déplacée dans l'image, chaque ensemble de valeurs caractéristiques d'une zone appliqué à l'entrée du réseau d'automates conduisant à une configuration de sortie de ce réseau à partir de laquelle sont déterminés une texture parmi celles apprises dans la phase d'apprentissage, et une valeur de confiance associée fonction d'un écart entre la configuration de sortie obtenue et celle associée à cette texture déterminée.

2. Procédé selon la revendication 1, caractérisé en ce que l'ensemble de valeurs caractéristiques représentatif d'un échantillon de texture ou d'une zone d'image est l'ensemble des valeurs d'une fonction d'autocorrélation normalisée de la luminance des pixels, calculée pour des déplacements de corrélation de dimension h.h dans une fenêtre d'observation de l'échantillon de dimension t.t pixels où t est impair, h étant compris entre 2 et t-2.

3. Procédé selon la revendication 2, caractérisé en ce que, lors de la phase d'apprentissage, les coefficients de pondé ration sont modifiés à chaque rang d'itération en tenant compte de la variation effectuée au rang précédent, et en fonction inverse d'un gradient de l'erreur calculé à partir des différences entre la configuration de sortie obtenue et celle associée à la texture correspondant à l'exemple de texture en cours d'apprentissage.

4. Procédé selon l'une des revendications précédentes caractérisé en ce que, le réseau d'automates étant structuré en plusieurs niveaux et comportant au dernier niveau un nombre d'automates égal au nombre de textures différentes à apprendre, la configuration de sortie correspondant à une texture donnée de numéro j est formée d'une valeur +1 sur la sortie de rang j du réseau d'automates et de valeurs -1 sur toutes les autres sorties.

5. Procédé selon la revendication 4 caractérisé en ce que, durant la phase de classification, la détermination de la texture d'une zone parmi celles apprises est effectuée en sélectionnant parmi les sorties du réseau celle dont la valeur est la plus proche de +1, son rang j déterminant la texture y associée.

6. Procédé selon l'une des revendications 1 à 5, caractérisé en ce que, pour l'analyse d'une image, la

7

fenêtre d'observation est déplacée de n pixels en n pixels horizontalement et verticalement pour couvrir toute l'image, la texture déterminée pour une zone analysée étant affectée à tous les pixels de la zone élémentaire de n.n pixels entourant le pixel central de la fenêtre d'observation.

7. Procédé selon la revendication 6, caractérisé en ce que la phase de classification comporte une phase finale au cours de laquelle la valeur de confiance des pixels ou zones élémentaires isolés dans la carte de classification par texture conduit lorsqu'elle est inférieure à un seuil de confiance prédéterminé, à affecter à ce pixel ou zone élémentaire la classification majoritaire dans son voisinage, chaque pixel de son voisinage votant avec un poids égal à sa confiance.

8. Dispositif de segmentation automatique d'images par analyse de texture destiné à la mise en oeuvre du procédé selon l'une des revendications précédentes, caractérisé en ce qu'il comporte un processeur de traitement de données et un réseau d'automates, les entrées des automates du réseau étant pondérées par des coefficients de pondération ajustables.

9. Dispositif selon la revendication 8, caractérisé en ce que le réseau d'automates est organisé en plusieurs niveaux, son premier niveau comportant autant d'automates à une seule entrée que de valeurs formant l'ensemble de valeurs caractéristiques d'un échantillon de texture ou d'une zone d'image, un deuxième niveau comportant un nombre d'automates inférieur au nombre d'exemples, chaque automate ayant un nombre d'entrées égal au nombre d'automates du niveau précédent, et un dernier niveau comportant un nombre d'automates égal au nombre de textures différentes, chaque automate de ce dernier niveau ayant un nombre d'entrées égal au nombre d'automates du niveau précédent.

10. Dispositif selon l'une des revendications 8 et 9, caractérisé en ce que les automates comportent chacun un sommateur pondéré relié à toutes les entrées de l'automate, chaque valeur d'entrée étant pondérée par un coefficient de pondération ajustable avant que les valeurs d'entrée ainsi pondérées soient sommées, et un générateur de fonction tangente hyperbolique relié à la sortie du sommateur.

## FIG_1

On
Oi
O2
O1

$\omega_{nj}$
$\omega_{ij}$
$\omega_{2j}$
$\omega_{1j}$

10

SOMMATEUR
PONDERE

Aj

$xj$

20

$f(xj)$

$Oj$

## FIG_2

$A_{11}$

$A_{12}$

$A_{13}$

$A_{1n1}$

$A_{21}$

$A_{22}$

$A_{2n2}$

$A_{13}$

$A_3^2$

$A_{3n3}$

E

S

## FIG_3

t

b

pixel (x,y)

a

$1^{ère}$ fenêtre

a

b

pixel
associé
(x+a, y+b)

t

FIG_4

DEBUT

INITIALISATIONS

j = 1

i = 1

Sélection du i$^e$ exemple de la texture n°j

Calcul de l'autocovariance modifiée de cet échantillon

Stockage de l'autocovariance modifiée et du numéro de la texture dans le fichier des exemples

i := i+1

j := j+1

i = nombres d'échantillons de la texture j ?   NON

j = nombre de textures   NON

OUI

Fermeture du fichier

FIN

DEBUT

FIG_5

Initialisation
du réseau

n: = 0

Extraction d'un
exemple du fichier
d'apprentissage

Apprentissage
de cet exemple

n:= n+1

n =nombre
d'exemples — NON

OUI

Ajustement de la
vitesse
d'apprentissage

tous les
exemples ont-ils
été correctement
classifiés — NON

OUI

Sauvegarde de
l'état du reseau

FIN

# FIG_6

DEBUT

INITIALISATIONS

EXTRACTION DE LA
FENETRE D'OBSERVATION
ENTOURANT LE PIXEL
A CLASSIFIER

CALCUL DE L'AUTO-
CORRELATION MODIFIEE
DE CETTE FENETRE

PRESENTATION DE L'AUTO-
CORRELATION MODIFIEE
A L'ENTREE
DU RESEAU

PASSAGE AU
PIXEL SUIVANT

CALCUL DE LA SORTIE
DU RESEAU

CALCUL DE LA CLASSIFI-
CATION ET DE LA CONFIANCE

CLASSIFICATION
DE L'IMAGE TERMINEE? — NON

OUI

PASSAGE A L'ETAPE 2

## FIG_7

DEBUT

INITIALISATIONS

C:= confiance associée
a la classification du
pixel traité

C ≥ Seuil ?

NON

OUI

Passage au
pixel suivant

La classification
de ce pixel est
revue en fonction
de son voisinage

La classification
de ce pixel est
inchangée

Tous les pixels
ont-ils été traités

NON

OUI

FIN

FIG_8-c
CONFIANCE

FIG_8-d
CLASSIFICATION DEFINITIVE

FIG_8-a
IMAGE SOURCE AVEC FENETRES D'APPRENTISSAGE

FIG_8-b
CLASSIFICATION INTERMEDIAIRE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATTERN RECOGNITION LETTERS, vol. 2, no. 3, mars 1984, pages 185-191, Elsevier Science Publishers B.V., North-Holland, Amsterdam, NL; M. UNSER et al.: "Feature extraction and decision procedure for automated inspection of textured materials" * Page 186, colonne 1, lignes 24-30,34-36; page 186, colonne 2, lignes 26-36; page 189, colonne 1, lignes 5-9; page 189, colonne 2, lignes 18-22 * | 1,8 | G 06 F   15/70 |
| A | IEEE PROCEEDINGS ON PATTERN RECOGNITION AND IMAGE PROCESSING, Las Vegas, Nevada, 14-17 juin 1982, pages 208-213, IEEE, New York, US; A.K.C. WONG et al.: "Search-effective multi-class texture classification" * Résumé; page 210, colonne 2, lignes 39-45; page 212, colonne 1, lignes 34-40 * | 1,8 | |
| P,A | US-A-4 897 881  (CENTRE DE RECHERCHE INDUSTRIELLE DU QUEBEC) * Résumé; figure 5; colonne 1, ligne 44 - colonne 2, ligne 24; revendication 1 * | 1,8 | DOMAINES TECHNIQUES RECHERCHES (Int. Cl.5) G 06 F   15/70 |

Le présent rapport a été établi pour toutes les revendications

| Lieu de la recherche | Date d'achèvement de la recherche | Examinateur |
|---|---|---|
| LA HAYE | 26-11-1990 | KATERBAU R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant